# EUROPÄISCHE PATENTSCHRIFT

(11) **EP 1 219 942 B1**
(45) Veröffentlichungstag und Bekanntmachung des Hinweises auf die Patenterteilung: **11.08.2004**
(21) Anmeldenummer: 01130173.6
(22) Anmeldetag: 19.12.2001
(51) Int. Cl.: G01L 19/12, F16K 37/00

(54) **Druckanzeiger**
Pressure indicator
Indicateur de pression

(30) Priorität: 22.12.2000 DE 20021823 U
(43) Veröffentlichungstag der Anmeldung: 03.07.2002
(73) Patentinhaber: Voss Fluid GmbH + Co. KG, 51688 Wipperfürth (DE)
(72) Erfinder: Hester, Hilmar, 51688 Wipperfürth (DE); Pott, Harald, 42499 Hückeswagen (DE)
(74) Vertreter: Patentanwälte Dr. Solf & Zapf

(56) Entgegenhaltungen:
- EP-A- 0 927 878
- US-A- 2 036 391
- US-A- 4 389 962
- US-A- 5 014 786
- PATENT ABSTRACTS OF JAPAN vol. 2000, no. 09, 13. Oktober 2000 (2000-10-13) & JP 2000 170934 A (FUJIKURA RUBBER LTD), 23. Juni 2000 (2000-06-23)

## Beschreibung

Die vorliegende Erfindung betrifft einen Druckanzeiger für hydraulische und/oder pneumatische Drucksysteme gemäß dem Oberbegriff von Anspruch 1.

EP 0 927 878 beschreibt einen derartigen Druckanzeiger.

Druckanzeiger, wie sie im Prinzip auch bei sogenannten Schnellkochtöpfen (Dampfdrucktöpfen) vorgesehen sind, ermöglichen eine schnelle optische Erkennung des jeweiligen Druckzustandes. Im drucklosen Zustand steht das stiftförmige Anzeigeelement in seiner federkraftbedingten Ruheposition, in der es in der Regel auf der Anzeigeseite mit seiner Stirnendfläche etwa bündig mit dem Gehäuse abschließt. Bei Druckbeaufschlagung wird das Anzeigeelement gegen die Federkraft in seine das Gehäuse optisch erkennbar überragende Druckanzeigeposition bewegt. Solche Druckanzeiger sind zumeist nur für relativ geringe Drücke geeignet. Bei manchen Anwendungen, so z. B. im Falle des erwähnten Druckkochtopfes, ist das Gehäuse aus mehreren miteinander verschraubten Teilen gebildet, was einen relativ hohen Herstellungsaufwand und damit hohe Kosten verursacht.

Der vorliegenden Erfindung liegt die Aufgabe zugrunde, einen Druckanzeiger der beschriebenen Art zu schaffen, der durch konstruktiv sowie herstellungsmäßig einfache und preiswerte Ausgestaltung als Massenprodukt zum Einsatz in beliebigen Drucksystemen auch für höhere Drücke geeignet ist.

Erfindungsgemäß wird dies dadurch erreicht, dass das Anzeigeelement in der Druckanzeigeposition über Anschlagmittel am Gehäuse abgestützt wird.

Die den Ringspalt zwischen dem stiftförmigen Anzeigeelement und dem Gehäuse abdichtende Umfangsdichtung gewährleistet auch bei höheren Drücken eine sichere Abdichtung zwischen der Druckseite und der im äußeren Umgebungsbereich auf Atmosphärendruck liegenden Anzeigeseite. Daher ist der erfindungsgemäße Druckanzeiger vorteilhafterweise auch zum Dauereinsatz insbesondere in hydraulischen Drucksystemen geeignet, ohne dass dabei Leckagen im Bereich des Druckanzeigers zu befürchten wären. Dadurch kann der Druckanzeiger im Bereich von lösbaren Verbindungen, insbesondere Schnellkupplungen und/oder Meßkupplungen, einer Hydraulik-Anlage dauerhaft installiert werden, um so einem Monteur bei notwendigen Wartungsarbeiten Aufschluß über den jeweiligen Druckzustand der Leitung zu geben. Dies stellt einen wichtigen Sicherheitsaspekt dar, weil eine noch unter Druck stehende Verbindung nicht gelöst werden darf. Der Druckanzeiger macht sofort erkennbar, ob die Leitung noch unter Druck steht oder drucklos ist. Dadurch sind bei Wartungsarbeiten Unfälle und auch Umweltbelastungen durch Öl-Leckagen praktisch ausgeschlossen.

Der erfindungsgemäße Druckanzeiger ist durch seine sehr einfache Bauweise äußerst preisgünstig herstellbar und deshalb auch als Massenprodukt geeignet. Die funktionswesentlichen Bestandteile sind innerhalb des Gehäuses bevorzugt schraubverbindungsfrei gehalten. Dies wird auf der Anzeigeseite durch das insbesondere eingebördelte Abschlußelement erreicht. Diese sehr einfache und preisgünstige Montageart ist deshalb auch für die Anwendung bei höheren Drücken geeignet, weil erfindungsgemäß das Anzeigeelement in seiner Druckanzeigeposition über Anschlagmittel am Gehäuse abgestützt wird. Dadurch wird der Bereich der Umfangsdichtung und des diese im Gehäuse haltenden Abschlußelementes und auch dessen Bördelbefestigung vorteilhafterweise von druckbedingten Kräften wesentlich entlastet. In weiterer vorteilhafter Ausgestaltung weist das Gehäuse auch auf der Druckseite einen Bördelrand auf, der das Anzeigelement in der drucklosen Ruheposition gegen die Federkraft abstützt und so im Gehäuse hält. Damit bildet der erfindungsgemäße Druckanzeiger eine patronenartige Funktionseinheit, deren Bestandteile ohne Schraubverbindungen zusammengehalten werden. Dies führt zu einer außerordentlich preisgünstigen Herstellbarkeit.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels sowie einiger Ausführungsvarianten soll die Erfindung genauer erläutert werden. Dabei zeigt:
- Fig. 1: eine teilgeschnittene Seitenansicht eines erfindungsgemäßen Druckanzeigers zusammen mit einer zum Einbau in eine Druckleitung vorgesehenen Leitungsanschlußarmatur,
- Fig. 2: einen vergrößerten Längsschnitt des erfindungsgemäßen Druckanzeigers,
- Fig. 3: einen verkürzten Halb- Längsschnitt des Anzeigeelementes nach Fig. 2 in weiterer Ausgestaltung,
- Fig. 4: eine Ansicht ähnlich Fig. 3 in einer weiteren Ausgestaltungsvariante und
- Fig. 5: noch eine weitere Variante des Anzeigeelementes in einer Darstellung ähnlich Fig. 4.

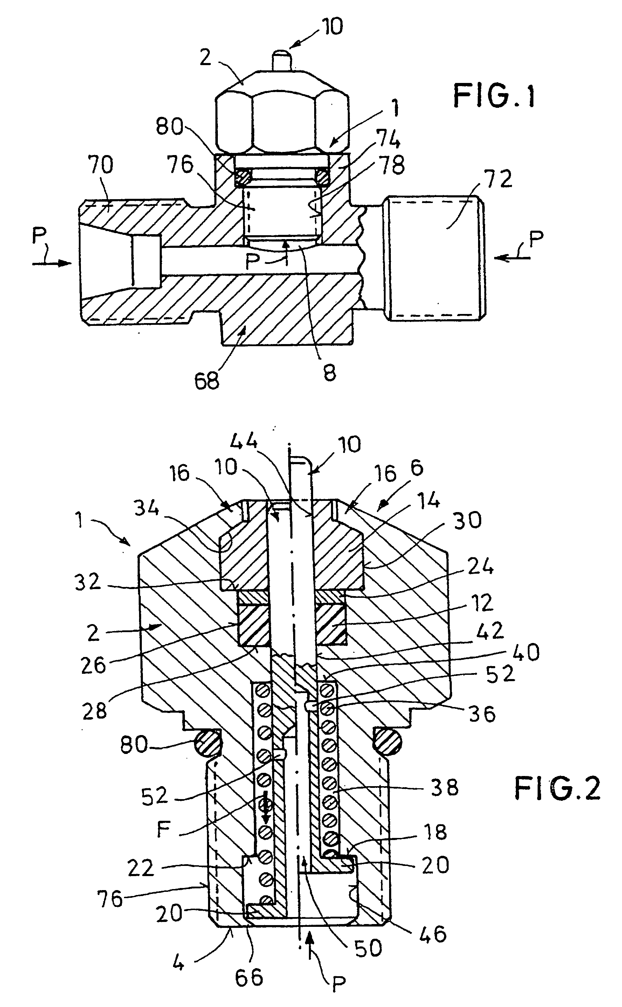

Wie sich zunächst aus Fig. 2 ergibt, besteht ein erfindungsgemäßer Druckanzeiger 1 aus einem Gehäuse 2 mit einer Druckseite 4 und einer gegenüberliegenden Anzeigeseite 6. Die Druckseite 4 ist mit einem Druckraum 8 (vgl. Fig. 1) eines insbesondere hydraulischen Drucksystems verbindbar, und die Anzeigeseite 6 liegt außen im Umgebungsbereich und damit auf Atmosphärendruck. In dem Gehäuse 2 ist ein stiftförmiges Anzeigeelement 10 zwischen Druckseite 4 und Anzeigeseite 6 in einem Gehäusedurchgang verschiebbar geführt. Das Anzeigeelement 10 ist auf der Druckseite 4 mit einem Druck p beaufschlagbar und dadurch aus einer federkraftbedingten Ruheposition (Fig. 2, linke Hälfte) gegen Rückstell-Federkraft F in eine das Gehäuse 2 auf der Anzeigeseite 6 überragende Druckanzeigeposition verschiebbar (Fig. 2, rechte Hälfte).

Erfindungsgemäß ist das Anzeigeelement 10 über eine Umfangsdichtung 12 gegen das Gehäuse 2 abgedichtet. Diese Umfangsdichtung 12, bei der es sich auch um eine druckabhängige Ausführung (z. B. "B + S-Stepseal") handeln kann, ist zur Anzeigeseite 6 hin durch ein ringförmiges bzw. buchsenartiges Abschlußelement 14 im Gehäuse 2 gehalten, indem das Abschlußelement 14 durch einen umgebördelten Gehäuserand 16 im Gehäuse 2 fixiert ist. Dabei ist weiterhin vorgesehen, dass das Anzeigeelement 10 in der Druckanzeigeposition (siehe nochmals in Fig. 2 die rechte Hälfte) über Anschlagmittel 18 am Gehäuse 2 unmittelbar abgestützt wird. Dadurch wird die Fixierung des Abschlußelementes 14 durch den umgebördelten Gehäuserand 16 vorteilhafterweise von druckbedingten Kräften entlastet, indem solche Kräfte weitgehend von diesem Bereich ferngehalten werden.

In der bevorzugten Ausführung sind die Anschlagmittel 18 einerseits von einem sich radial erstreckenden Ringansatz 20 am freien, der Druckseite 4 zugekehrten Ende des Anzeigeelementes 10 sowie andererseits von einer radialen Stufenfläche 22 im Gehäuse 2 gebildet.

Die Umfangsdichtung 12 sitzt - vorzugsweise gemeinsam mit einem Stützring 24 auf ihrer der Anzeigeseite 6 und dem Abschlußelement 14 zugekehrten Seite - in einer Ringkammer 26 zwischen einer radialen Gehäusefläche 28 und dem Abschlußelement 14. Somit begrenzt das Abschlußelement 14 die Ringkammer 26 zur Anzeigeseite 6 hin. Das Abschlußelement 14 selbst sitzt in einer Gehäuseausnehmung 30, die vorzugsweise gegenüber der Dichtungs- Ringkammer 26 über eine Stufenfläche 32 erweitert ist. Somit sitzt das Abschlußelement 14 axial eingespannt zwischen der Stufenfläche 32 und dem umgebördelten Gehäuserand 16. Zur Anlage des Gehäuserandes 16 weist das Abschlußelement 14 eine vorzugsweise etwa konisch angefaste Anlagefläche 34 auf.

Zur Erzeugung der Rückstell-Federkraft F ist bevorzugt eine Schraubendruckfeder 36 vorgesehen, die das Anzeigeelement 10 umschließend in einer Federkammer 38 des Gehäuses 2 axial zwischen dem endseitigen Ringansatz 20 des Anzeigeelementes 10 und einer die Federkammer 38 auf ihrer der Druckseite 4 gegenüberliegenden, der Umfangsdichtung 12 zugekehrten Seite begrenzenden Stufenfläche 40 des Gehäuses 2 angeordnet ist. Zwischen dieser die Federkammer 38 begrenzenden Stufenfläche 40 und der die Umfangsdichtung 12 aufnehmenden Ringkammer 26 ist im Gehäuse 2 ein Führungsbereich 42 für das stiftförmige Anzeigeelement 10 gebildet. Eine weitere Führung zur kippfreien Schiebeführung des Anzeigeelementes 10 bildet das Abschlußelement 14 mit einer entsprechenden zentrischen Führungsöffnung 44.

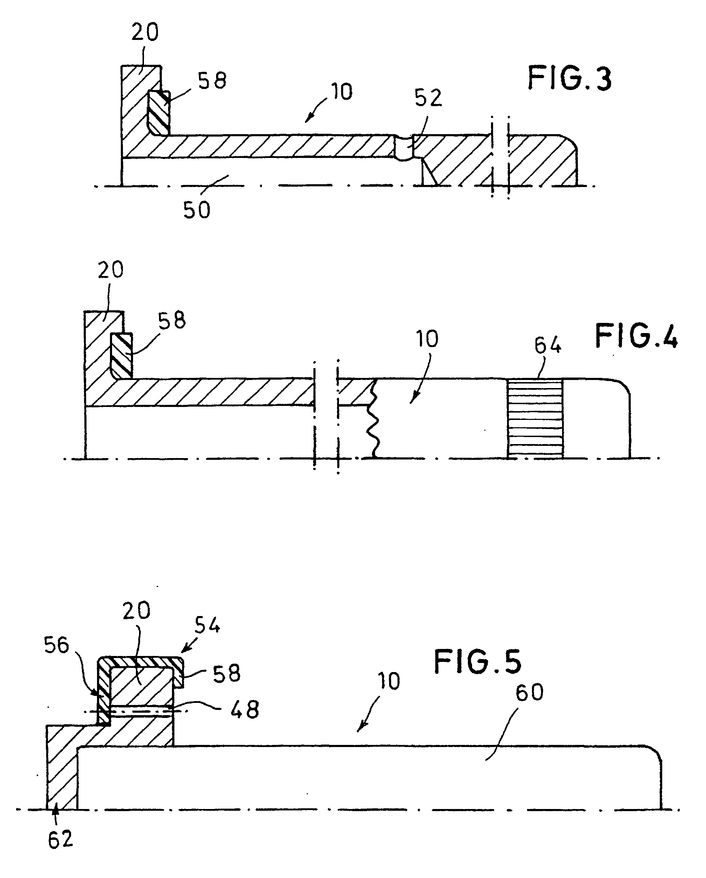

In weiterer zweckmäßiger Ausgestaltung der Erfindung sind Dämpfungsmittel zur Bewegungsdämpfung des Anzeigeelementes 10 vorgesehen. Dadurch werden im Falle von Druckschwankungen schwingungsbedingte Geräusche vermieden. In der dargestellten, bevorzugten Ausführung ist der Ringansatz 22 des Anzeigeelementes 10 kolbenartig in einer in Richtung der Druckseite 4 offenen Gehäuseerweiterung 46 geführt, wobei zwischen der Druckseite 4 und der Federkammer 38 eine Passage für das jeweilige Druckmittel derart gebildet, dass bei Bewegungen des Anzeigeelementes 10 eine Strömungsdämpfung erfolgt. Die Federkammer 38 bildet dabei eine Volumenkammer zur Aufnahme eines bestimmten Volumens des jeweiligen Druckmittels. Die Druckmittel-Passage kann durch einen Ringspalt zwischen dem Ringansatz 20 des Anzeigeelementes 10 und der Innenfläche der Gehäuseerweiterung 46 gebildet sein. Alternativ oder zusätzlich kann als Passage auch mindestens eine axiale Strömungsöffnung 48 des Ringansatzes 20 vorgesehen sein; vgl. dazu Fig. 5. Eine weitere Variante - alternativ oder in Kombination - ist in Fig. 2 und 3 veranschaulicht, wonach die Passage durch ein zentrischen Sackloch 50 des Anzeigeelementes 10 in Kombination mit mindestens einer (wie dargestellt z. B. zwei) radialen Strömungsöffnung 52 gebildet ist. Dabei liegt die bzw. jede radiale Strömungsöffnung 52 in einem Bereich, der in jeder Stellung des Anzeigeelementes 10 im Bereich der Federkammer 38 liegt.

Die Passage ist bezüglich ihres wirksamen Strömungsquerschnittes so bemessen, dass bei den Bewegungen des Anzeigeelementes 10 jedenfalls eine Bewegungsdämpfung erreicht wird.

Darüber hinaus können der Druckmittel-Passage mit Vorteil auch Dämpfungsventilmittel derart zugeordnet sein, dass in den zwei Bewegungsrichtungen des Anzeigeelementes 10 unterschiedlich starke Dämpfungen erreicht werden.

Beispielsweise ist in der Ausführung nach Fig. 5 ein Profilelement 54 aus einem gummielastischen Material vorgesehen, welches auf dem Ringansatz 20 sitzt und mit einem membranventilartigen Abschnitt 56 insbesondere auf der Druckseite 4 die bzw. jede axiale Strömungsöffnung 48 überdeckt. Dadurch wird ein Rückschlagventil gebildet, wodurch insbesondere die Bewegung aus der Druckanzeigeposition zurück in die Ruheposition stärker gedämpft wird als die umgekehrte Bewegung. Es ist weiterhin vorteilhaft, wenn im Bereich der Anschlagmittel 18 mindestens ein Anlageelement 58 aus einem gummielastischen Material angeordnet ist. Dadurch wird ein elastischer Endanschlag für das Anzeigeelement 10 in der Druckanzeigeposition gebildet. Dadurch werden störende Geräusche vermieden. Gemäß Fig. 3 und 4 handelt es sich bei dem Anlageelement 58 um einen Ring, der auf dem Ringansatz 20 liegt und diesen in Richtung der Endanschlagstellung überragt. Im Falle der Fig. 5 handelt es sich um einen entsprechenden Abschnitt des Profilelementes 54.

In den Ausführungen nach Fig. 2 bis 4 ist das Anzeigeelement einstückig mit dem Ringansatz 20 ausgebildet. Bei der Variante nach Fig. 5 besteht das Anzeigeelement 10 aus einem länglichen, zylindrischen Stiftelement 60 und einem den Ringansatz 20 aufweisenden Stützelement 62, welches einendig kappenartig auf dem Stiftelement 60 sitzt und auf geeignete Weise befestigt ist, beispielsweise kraft- und/oder formschlüssig und/oder stoffschlüssig. Diese Ausführung hat den Vorteil, dass als Stiftelement 60 ein Nadellager-Wälzkörper verwendet werden kann. Solche Teile sind außerordentlich preiswert erhältlich, bieten aber dennoch eine hohe Qualität für eine gute Abdichtung und geringe Bewegungsreibung, weil sie eine glatte, polierte und gehärtete Oberfläche aufweisen.

Gemäß Fig. 4 kann das Anzeigeelement 10 - insbesondere in seinem freien, der Anzeigeseite 6 zugekehrten Bereich - ein Auslöseelement 64, beispielsweise ein Induktionsband, für eine sensorische, beispielsweise induktive Erfassung der Druckanzeigeposition aufweisen.

Wie sich noch aus Fig. 2 ergibt, weist das Gehäuse 2 auch auf der Druckseite 4 einen Bördelrand 66 auf, der das Anzeigeelement 10 in der drucklosen Ruheposition gegen die Federkraft F abstützt und so im Gehäuse 2 hält, dass das Anzeigeelement 10 in der Ruheposition auf der Anzeigeseite 6 im wesentlichen bündig mit dem Gehäuse 2 bzw. mit dem Abschlußelement 14 abschließt.

In Fig. 1 ist zusätzlich noch eine Leitungsanschlußarmatur 68 dargestellt, die zum Anschluß des erfindungsgemäßen Druckanzeigers 1 an eine Druckleitung dient. Dazu weist die Anschlußarmatur 68 mindestens einen, wie dargestellt z.B. zwei Leitungsanschlüsse 70, 72 sowie einen Abzweigabschluß 74 für die Druckseite 4 des Gehäuses 2 des erfindungsgemäßen Druckanzeigers 1 auf. Mit Vorteil weist die Leitungsanschlußarmatur 68 ein T-förmiges Anschlußgehäuse auf. Der Druckanzeiger 1 weist auf der Druckseite bevorzugt einen Außengewindestutzen 76 zum Einschrauben in ein entsprechendes Innengewinde 78 des Abzweiganschlusses 74 der Anschlußarmatur 68 auf. Zur Abdichtung ist ein Dichtring 80 vorgesehen.

## Patentansprüche

1. Druckanzeiger (1) für hydraulische und/oder pneumatische Drucksysteme, bestehend aus einem Gehäuse (2) mit einer mit einem Druckraum (8) des Drucksystems verbindbaren Druckseite (4) und einer entgegengesetzten Anzeigeseite (6) sowie aus einem in dem Gehäuse (2) zwischen Druck- und Anzeigeseite (4, 6) verschiebbar geführten Anzeigeelement (10), wobei das Anzeigeelement (10) auf der Druckseite (4) mit einem Druck (p) beaufschlagbar und dadurch aus einer federbedingten Ruheposition gegen Federkraft (F) auf der Anzeigeseite (6) in eine Druckanzeigeposition verschiebbar ist, wobei
das Anzeigeelement (10) über eine Umfangsdichtung (12) gegen das Gehäuse (2) abgedichtet ist, wobei die Umfangsdichtung (12) zur Anzeigeseite (6) hin durch ein ringförmiges Abschlußelement (14) im Gehäuse (2) gehalten ist, wobei das Abschlußelement (14) insbesondere durch einen umgebördelten Gehäuserand (16) fixiert ist,
**dadurch gekennzeichnet, dass** das Anzeigeelement (10) in der Druckanzeigeposition über Anschlagmittel (18) am Gehäuse (2) abgestützt wird.

2. Druckanzeiger nach Anspruch 1,
**dadurch gekennzeichnet, dass** die Anschlagmittel (18) einerseits von einem sich radial erstreckenden Ringansatz (20) am freien, der Druckseite (4) zugekehrten Ende des Anzeigeelementes (10) und andererseits von einer radialen Stufenfläche (22) im Gehäuse (2) gebildet sind.

3. Druckanzeiger nach Anspruch 1 oder 2,
**dadurch gekennzeichnet,dass** die Umfangsdichtung (12) - vorzugsweise gemeinsam mit einem Stützring (24) - in einer Ringkammer (26) zwischen einer radialen Gehäusefläche (28) und dem Abschlußelement (14) sitzt.

4. Druckanzeiger nach Anspruch 2 oder 3,
**dadurch gekennzeichnet, dass** zur Erzeugung der Federkraft (F) ein Druckfederelement (36) das Anzeigeelement (10) umschließend in einer Federkammer (38) des Gehäuses (2) axial zwischen dem endseitigen Ringansatz (20) des Anzeigeelement (10) und einer die Federkammer (38) auf ihrer der Druckseite (4) gegenüberliegenden, der Umfangsdichtung (12) zugekehrten Seite begrenzenden Stufenfläche (40) des Gehäuses (2) angeordnet ist.

5. Druckanzeiger nach einem der Ansprüche 1 bis 4,
**gekennzeichnet durch** Dämpfungsmittel zur Bewegungsdämpfung des Anzeigeelementes (10).

6. Druckanzeiger nach einem der Ansprüche 4 bis 5,
**dadurch gekennzeichnet, dass** der Ringansatz (20) des Anzeigeelementes (10) kolbenartig in einer in Richtung der Druckseite (4) offenen Gehäuseerweiterung (46) geführt ist, wobei zwischen der Druckseite (4) und der Federkammer (38) eine Passage für das jeweilige Druckmittel derart gebildet ist, dass bei Bewegungen des Anzeigeelementes (10) eine Strömungsdämpfung erfolgt.

7. Druckanzeiger nach Anspruch 6,
**dadurch gekennzeichnet, dass** die Druckmittel-Passage durch einen Ringspalt zwischen dem Ringansatz (20) des Anzeigeelementes (10) und der Gehäuseerweiterung (46) und/oder durch mindestens eine axiale Strömungsöffnung (48) des Ringansatzes (20) und/oder durch ein Sackloch (50) des Anzeigeelementes (10) in Kombination mit mindestens einer radialen Strömungsöffnung (52) gebildet ist.

8. Druckanzeiger nach Anspruch 6 oder 7,
**dadurch gekennzeichnet, dass** der Druckmittel-Passage Dämpfungsventilmittel derart zugeordnet sind, dass in den zwei Bewegungsrichtungen des Anzeigeelementes (10) unterschiedlich starke Dämpfungen erreicht werden.

9. Druckanzeiger nach einem der Ansprüche 1 bis 8,
**dadurch gekennzeichnet, dass** im Bereich der Anschlagmittel (18) mindestens ein Anlageelement (58) aus einem gummielastischen Material vorgesehen ist.

10. Druckanzeiger nach einem der Ansprüche 2 bis 9,
**dadurch gekennzeichnet, dass** das Anzeigeelement (10) einstückig mit dem Ringansatz (20) ausgebildet ist.

11. Druckanzeiger nach einem der Ansprüche 2 bis 9,
**dadurch gekennzeichnet, dass** das Anzeigeelement (10) zumindest zweiteilig aus einem länglichen, zylindrischen Stiftelement (60) und einem den Ringansatz (20) aufweisenden, einendig kappenartig auf dem Stiftelement (60) sitzenden Stützelement (62) besteht.

12. Druckanzeiger nach einem der Ansprüche 1 bis 11,
**dadurch gekennzeichnet, dass** das Anzeigeelement (10) - insbesondere in seinem freien, der Anzeigeseite (6) zugekehrten Bereich - ein Auslöseelement (64), z. B. ein Induktionsband, für eine sensorische, z. B. induktive Erfassung der Druckanzeigeposition aufweist.

13. Druckanzeiger nach einem der Ansprüche 1 bis 12,
**dadurch gekennzeichnet, dass** das Gehäuse (2) auf der Druckseite (4) einen Bördelrand (66) aufweist, der das Anzeigeelement (10) in der drucklosen Ruheposition gegen die Federkraft (F) abstützt.

14. Druckanzeiger nach einem der Ansprüche 1 bis 13,
**gekennzeichnet durch** eine Leitungsanschlußarmatur (68) mit mindestens einem Leitungsanschluß (70, 72)und einem Abzweiganschluß (74) für die Druckseite (4) des Gehäuses (2).

## Claims

1. Pressure indicator (1) for hydraulic and/or pneumatic pressure systems, comprising a housing (2) with a pressure side (4), which can be connected to a pressure space (8) of the pressure system, and an opposite indication side (6), as well as an indication element (10) guided displacably between pressure and indication sides (4, 6) in the housing (2), it being possible for a pressure (p) to be applied to the indication element (10) on the pressure side (4), so that the indication element (10) can be displaced out of a spring-loaded at-rest position, counter to spring force (F) on the indication side (6), into a pressure-indicating position, the indication element (10) being sealed with respect sealed with respect to the housing (2) by means of a peripheral seal (12), the peripheral seal (12) being held in the housing (2) towards the indication side (6) by an annular closure element (14), the closure element (14) being fixed in particular by a flanged-over housing rim (16), **characterized in that** the indication element (20), in the pressure-indicating position, is supported on the housing (2) by stop means (18).

2. Pressure indicator according to Claim 1, **characterized in that** the stop means (18) are formed on one side by a radially extending annular shoulder (20) at the free end, facing the pressure side (4), of the indication element (10) and on the other side by a radial step surface (22) in the housing (2).

3. Pressure indicator according to Claim 1 or 2, **characterized in that** the peripheral seal (12) - preferably together with a supporting ring (24) - is seated in an annular chamber (26) between a radial housing surface (28) and the closure element (14).

4. Pressure indicator according to Claim 2 or 3, **characterized in that** to produce the spring force (F) a compression spring element (36) surrounding the indication element (10) is arranged in a spring chamber (38) of the housing (2) axially between the end-side annular shoulder (20) of the indication element (10) and a step surface (40), which delimits the spring chamber (38) on its opposite side from the pressure side (4), i.e. the side facing the peripheral seal (12), of the housing (2).

5. Pressure indicator according to one of Claims 1 to 4, **characterized by** damping means for damping the movement of the indication element (10).

6. Pressure indicator according to either of Claims 4 and 5, **characterized in that** the annular shoulder (20) of the indication element (10) is guided in the manner of a piston in a widened section (46) of. the housing which is open in the direction of the pressure side (4), a passage for the respective pressure medium being formed between the pressure side (4) and the spring chamber (38) in such a manner that the flow is damped in the event of movements of the indication element (10).

7. Pressure indicator according to Claim 6, **characterized in that** the pressure medium passage is formed by an annular gap between the annular shoulder (20) of the indication element (10) and the widened section (46) of the housing and/or by at least one axial flow opening (48) in the annular shoulder (20) and/or by a blind bore (50) in the indication element (10) in combination with at least one radial flow opening (52).

8. Pressure indicator according to Claim 6 or 7, **characterized in that** the pressure medium passage is assigned damping valve means, in such a manner that different levels of damping are achieved in the two directions of movement of the indication element (10).

9. Pressure indicator according to one of Claims 1 to 8, **characterized in that** at least one bearing element (58) made from an elastomeric material is provided in the region of the stop means (18).

10. Pressure indicator according to one of Claims 2 to 9, **characterized in that** the indication element (10) is formed integrally with the annular shoulder (20).

11. Pressure indicator according to one of Claims 2 to 9, **characterized in that** the indication element (10) comprises at least two parts, namely an elongate, cylindrical pin element (60) and a supporting element (62) which includes the annular shoulder (20) and is seated at one end, in the manner of a cap, on the pin element (60).

12. Pressure indicator according to one of Claims 1 to 11, **characterized in that** the indication element (10) - in particular in its free region facing the indication side (6) - has a triggering element (64), e.g. an induction strip, for sensor detection, e.g. inductive detection, of the pressure-indicating position.

13. Pressure indicator according to one of Claims 1 to 12, **characterized in that** the housing (2), on the pressure side (4), has a flanged edge (66) which supports the indication element (10) in the pressure-free at-rest position counter to the spring.force (F).

14. Pressure indicator according to one of Claims 1 to 13, **characterized by** a line connection fitting (68) with at least one line connection (70, 72) and a branch connection (74) for the pressure side (4) of the housing (2).

## Revendications

1. Indicateur de pression (1) pour des systèmes à pression hydraulique et/ou pneumatique, comprenant un boîtier (2) avec un côté pression (4) pouvant être relié à une chambre de pression (8) du système à pression et un côté indication (6) opposé, ainsi qu'un élément indicateur (10) guidé de manière coulissante dans le boîtier (2) entre le côté pression et le côté indication (4, 6), l'élément indicateur (10) pouvant être soumis du côté pression (4) à une pression (p) et par là même pouvant coulisser à partir d'une position de repos conditionnée par ressort en s'opposant à la force du ressort (F) du côté indication (6) vers une position d'indication de pression, l'élément indicateur (10) étant étanche par rapport au boîtier (2) par l'intermédiaire d'un joint périphérique (12), ledit joint périphérique (12) étant maintenu dans le boîtier (2) vers le côté indication (6) par un élément d'obturation annulaire (14), ledit élément d'obturation (14) étant fixé en particulier par un bord de boîtier rabattu (16), **caractérisé en ce que** l'élément indicateur (10) est supporté dans la position d'indication de pression par l'intermédiaire de moyens de butée (18) sur le boîtier (2).

2. Indicateur de pression selon la revendication 1, **caractérisé en ce que** les moyens de butée (18) sont formés, d'une part, par un épaulement annulaire (20) s'étendant radialement à l'extrémité libre de l'élément indicateur (10) tournée vers le côté pression (4) et, d'autre part, par une surface étagée radiale (22) dans le boîtier (2).

3. Indicateur de pression selon la revendication 1 ou 2, **caractérisé en ce que** le joint périphérique (12) est logé, de préférence conjointement avec une bague d'appui (24), dans une chambre annulaire (26) entre une surface de boîtier radiale (28) et l'élément d'obturation (14).

4. Indicateur de pression selon la revendication 2 ou 3, **caractérisé en ce que**, pour produire la force du ressort (F), un élément de ressort de pression (36) enfermant l'élément indicateur (10) est agencé dans une chambre de ressort (38) du boîtier (2), axialement entre l'épaulement annulaire côté extrémité (20) de l'élément indicateur (10) et une surface étagée (40) du boîtier (2) limitant la chambre de ressort (38) sur son côté opposé au côté pression (4), tourné vers le joint périphérique (12).

5. Indicateur de pression selon l'une des revendications 1 à 4, **caractérisé par** des moyens d'affaiblissement pour affaiblir le déplacement de l'élément indicateur (10).

6. Indicateur de pression selon l'une des revendications 4 à 5, **caractérisé en ce que** l'épaulement annulaire (20) de l'élément indicateur (10) est guidé à la manière d'un piston dans un élargissement de boîtier (46) ouvert en direction du côté pression (4), un passage pour le fluide sous pression étant formé entre le côté pression (4) et la chambre de ressort (38), de façon à ce qu'un affaiblissement de l'écoulement se produise lors du déplacement de l'élément indicateur (10).

7. Indicateur de pression selon la revendication 6, **caractérisé en ce que** le passage de fluide sous pression est formé par une fente annulaire entre l'épaulement annulaire (20) de l'élément indicateur (10) et l'élargissement de boîtier (46) et/ou par au moins une ouverture d'écoulement axiale (48) de l'épaulement annulaire (20) et/ou par un trou borgne (50) de l'élément indicateur (10) en association avec au moins une ouverture d'écoulement radiale (52).

8. Indicateur de pression selon la revendication 6 ou 7, **caractérisé en ce que** des moyens de soupape d'affaiblissement sont associés au passage de fluide sous pression de façon à obtenir des affaiblissements de valeur différente dans les deux directions de déplacement de l'élément indicateur (10).

9. Indicateur de pression selon l'une des revendications 1 à 8, **caractérisé en ce qu'**au moins un élément d'appui (58) réalisé dans un matériau élastique est prévu dans la zone des moyens de butée (18).

10. Indicateur de pression selon l'une des revendications 2 à 9, **caractérisé en ce que** l'élément indicateur (10) est conçu d'une seule pièce avec l'épaulement annulaire (20).

11. Indicateur de pression selon l'une des revendications 2 à 9, **caractérisé en ce que** l'élément indicateur (10) est constitué au moins en deux parties d'un élément de tige (60) cylindrique allongé et d'un élément de support (62) présentant l'épaulement annulaire (20), logeant à une extrémité à la manière d'un chapeau sur l'élément de tige (60).

12. Indicateur de pression selon l'une des revendications 1 à 11, **caractérisé en ce que** l'élément indicateur (10) présente, en particulier dans sa zone libre tournée vers le côté indication (6), un élément de déclenchement (64) tel qu'une bande d'induction, par exemple, pour une détection par capteur, inductive par exemple, de la position d'indication de pression.

13. Indicateur de pression selon l'une des revendications 1 à 12, **caractérisé en ce que** le boîtier (2) présente du côté pression (4) un bord rabattu (66) qui supporte l'élément indicateur (10) dans la position de repos sans pression en s'opposant à la force du ressort (F).

14. Indicateur de pression selon l'une des revendications 1 à 13, **caractérisé par** des accessoires de tuyau (68) avec au moins un raccord de tuyau (70, 72) et un raccord de dérivation (74) pour le côté pression (4) du boîtier (2).
